# DEMANDE DE BREVET EUROPEEN

(11) **EP 3 846 489 A1**
(43) Date de publication de la demande: **07.07.2021**
(21) Numéro de dépôt: 20212371.7
(22) Date de dépôt: 08.12.2020
(51) Int. Cl.: H04N 21/845, H04N 21/6437, H04N 21/2387

(54) **PROCÉDÉ DE GESTION D'UN TÉLÉCHARGEMENT PROGRESSIF ET ADAPTATIF D'UN CONTENU NUMÉRIQUE PAR UN TERMINAL LECTEUR DE FLUX MULTIMÉDIA CONNECTÉ À UN RÉSEAU DE COMMUNICATION, DISPOSITIF DE GESTION, TERMINAL LECTEUR DE FLUX MULTIMÉDIA ET PROGRAMME D'ORDINATEUR CORRESPONDANTS**

(30) Priorité: 02.01.2020 FR 2000002
(71) Demandeur: ORANGE, 75015 Paris (FR)
(72) Inventeur: GASTE, Olivier, 92326 CHATILLON CEDEX (FR); MARCHAND, Hervé, 92326 CHATILLON CEDEX (FR)
(74) Mandataire: Vidon Brevets & Stratégie

(57) **Abrégé**

L'invention concerne un procédé de gestion du téléchargement progressif adaptatif d'un contenu numérique au sein d'un terminal lecteur de flux multimédia connecté à un réseau de communication, ledit contenu numérique étant associé à un fichier de description (MPD) dudit contenu numérique, comprenant une liste de segments temporels dudit contenu associés chacun à plusieurs débits d'encodage ou qualités (Dj) dudit contenu.

Ledit procédé met en œuvre :
- une obtention (32) d'une vitesse de connexion (CS) au réseau de communication déterminée à partir d'une taille et d'un temps de téléchargement d'au moins un segment temporel déjà téléchargé, et
- une sélection (37) pour au moins un prochain segment temporel à télécharger, d'une qualité maximale du contenu, en fonction de la vitesse de connexion et d'un rapport, dit facteur de gain (GF), entre un débit d'encodage réel (R) dudit segment temporel déjà téléchargé et la qualité (Dj) associée audit segment temporel dans le fichier de description.

## Description

### Domaine technique de l'invention.

Le domaine de l'invention est celui des contenus multimédias numériques, à savoir les contenus audio et/ou vidéo numériques, et plus particulièrement les contenus multimédias numériques obtenus selon une technique dite de téléchargement progressif et adaptatif au sein d'un réseau de communication.

Plus précisément, l'invention concerne la gestion du téléchargement progressif et adaptatif d'un contenu numérique au sein d'un terminal lecteur de flux multimédia connecté audit réseau de communication.

### Art antérieur.

L'accès à un contenu multimédia numérique, tel que la télévision ou la vidéo à la demande, depuis un réseau de type Internet, est possible aujourd'hui, pour la plupart des terminaux clients, notamment lorsqu'ils appartiennent à un réseau de communication local, tel qu'un réseau domestique.

Le terminal émet généralement une requête à destination d'un serveur, en indiquant le contenu choisi et il reçoit en retour un flux de données numériques relatives à ce contenu. Dans le cadre d'un réseau de communication local, une telle requête transite par la passerelle d'accès au réseau, par exemple la passerelle résidentielle.

Le terminal est adapté pour recevoir ces contenus numériques sous forme de données multimédia et pour en faire une restitution. Cette restitution consiste à fournir au niveau du terminal le contenu numérique sous une forme accessible à l'utilisateur. Par exemple, des données reçues correspondant à une vidéo sont généralement décodées, puis restituées au niveau du terminal sous la forme d'un affichage de la vidéo correspondante avec sa bande-son associée. Dans la suite, par souci de simplification, on assimilera le contenu numérique à une vidéo et la restitution par le terminal, ou consommation par l'utilisateur du terminal, à une visualisation ou lecture sur l'écran du terminal.

La diffusion de contenus numériques sur Internet est souvent basée sur des protocoles client-serveur de la famille HTTP (de l'anglais « Hyper Text Transfer Protocol », pour « protocole de transfert hypertexte »). En particulier, le téléchargement en mode progressif des contenus numériques, aussi appelé streaming, permet de transporter et consommer les données en temps réel, c'est-à-dire que les données numériques sont transmises sur le réseau et restituées par le terminal au fur et à mesure de leur arrivée. Le terminal reçoit et stocke une partie des données numériques dans une mémoire tampon avant de les restituer. Ce mode de distribution est particulièrement utile quand le débit dont dispose l'utilisateur n'est pas garanti pour le transfert en temps réel de la vidéo.

Le téléchargement progressif adaptatif, en anglais HTTP Adaptative Streaming, d'abréviation HAS, permet de surcroît de diffuser et recevoir des données suivant différentes qualités correspondant par exemple à différents débits d'encodage. Ces différentes qualités sont décrites dans un fichier de paramètres disponible en téléchargement sur un serveur de données, par exemple un serveur de contenus. Quand le terminal client souhaite accéder à un contenu, ce fichier de description permet de sélectionner le bon format pour le contenu à consommer en fonction de la bande passante disponible ou des capacités de stockage et de décodage du terminal client. Ce type de technique permet notamment de tenir compte des variations de bande passante sur la liaison entre le terminal client et le serveur de contenus.

Il existe plusieurs solutions techniques pour faciliter la distribution d'un tel contenu en streaming, comme par exemple les solutions propriétaires Microsoft® Smooth Streaming, Apple® HLS, Adobe® HTTP Dynamic Streaming ou encore la norme MPEG-DASH de l'organisme ISO/IEC qui sera décrite ci-après. Ces méthodes proposent d'adresser au client un ou plusieurs fichiers de description intermédiaires, appelés aussi documents ou manifestes, contenant les adresses des différents segments aux différentes qualités du contenu multimédia.

Ainsi, la norme MPEG-DASH (pour l'anglais "Dynamic Adaptive Streaming over HTTP", en français « diffusion en flux adaptatif dynamique sur HTTP ») est un standard de format de diffusion audiovisuelle sur Internet. Il se base sur la préparation du contenu en différentes présentations de qualité et débit variables, découpées en segments temporels de courte durée (de l'ordre de quelques secondes), également appelés « chunks ». Chacun de ces segments temporels est rendu disponible individuellement au moyen d'un protocole d'échange. Le protocole principalement ciblé est le protocole HTTP, mais d'autres protocoles (par exemple FTP) peuvent également être utilisés. L'organisation des segments et les paramètres associés sont publiés dans un fichier de description ou manifeste au format XML.

Le principe sous-jacent à cette norme est que le client MPEG-DASH effectue une estimation de la bande passante disponible pour la réception des segments, et, en fonction du remplissage d'une mémoire tampon de réception, choisit, pour le prochain segment à charger, une représentation dont le débit :
- assure la meilleure qualité possible,
- et permet un délai de réception compatible avec le rendu ininterrompu du contenu.

Ainsi, pour s'adapter à la variation des conditions réseau, notamment en termes de bande passante, les solutions existantes de téléchargement adaptatif permettent au terminal client de passer d'une version du contenu encodée à un certain débit, à une autre encodée à un autre débit, au cours du téléchargement. En effet, chaque version du contenu est divisée en segments temporels de même durée. Pour permettre une restitution en continu du contenu sur le terminal, chaque segment doit atteindre le terminal avant son instant programmé de restitution. La qualité perçue associée à un segment augmente avec la taille du segment, exprimée en bits, mais dans le même temps, des segments plus gros requièrent un temps de transmission plus important, et donc présentent un risque accru de ne pas être reçus à temps pour une restitution en continu du contenu.

Le terminal client doit donc trouver un compromis entre la qualité globale du contenu, et sa restitution ininterrompue, en sélectionnant avec soin le prochain segment à télécharger, parmi les différents débits d'encodage proposés. Il existe pour ce faire différents algorithmes de sélection de la qualité du contenu en fonction de la bande passante disponible, qui peuvent présenter des stratégies plus ou moins agressives, ou plus ou moins sécuritaires.

En d'autres termes, afin d'assurer une certaine fluidité lors de la lecture, si la bande passante disponible ne permet pas d'accéder à la meilleure qualité proposée dans le manifeste, le terminal client va utiliser des flux de données de moins bonne qualité. Cette technique permet ainsi de proposer la meilleure qualité vidéo possible tout en garantissant une lecture ou visualisation du contenu numérique fluide.

La consommation de contenus numériques en téléchargement progressif adaptatif HAS tend à se démocratiser. Elle est notamment utilisée par de nombreux services de streaming (en français, diffusion en mode continu, ou lecture en continu), mais également par certains décodeurs TV, ou set-top-box, qui l'utilisent pour accéder à des contenus délinéarisés, tels que la vidéo à la demande ou VOD (en anglais, « Video On Demand »), la diffusion en différé de programmes télévisuels (en anglais, « Replay »), ou encore les offres de type Network PVR (pour «Network Personal Video Recorder», en anglais, i.e. un service d'enregistrement des contenus numériques, effectué par le fournisseur de contenus lui-même plutôt qu'au domicile de l'utilisateur final).

En outre, d'autres dispositifs tels que des appareils lecteurs de flux multimédia en temps réel accèdent également aux contenus numériques en mode de téléchargement adaptatif et progressif pour des contenus télévisuels en temps réel (« live », en anglais). C'est le cas par exemple de l'appareil Chromecast® développé par Google®, ou de la Clé TV® d'Orange®. De tels appareils se branchent classiquement sur le port HDMI d'un téléviseur et communiquent, par connexion Wi-Fi®, avec un autre appareil du réseau de communication domestique connecté à un réseau de communication étendu de type Internet (passerelle résidentielle, ordinateur, téléphone intelligent de type smartphone, tablette...), afin de restituer, sur le téléviseur, le contenu multimédia reçu par une application logicielle compatible. On désignera par la suite ces appareils sous la désignation générique de clé HDMI.

Dans la suite, par souci de simplification, on assimilera le terme « terminal client » à l'association d'un terminal lecteur de flux multimédia (par exemple clé HDMI) et d'un terminal de restitution (par exemple un téléviseur) permettant de visualiser le contenu. On notera que le terminal de restitution peut être le terminal lecteur de flux multimédia lui-même (par exemple un téléphone mobile intelligent, une tablette), ou être distinct de celui-ci (par exemple un téléviseur connecté à une clé HDMI, ou à une set-top box (STB)).

Il existe plusieurs méthodes d'encodage du contenu numérique. Une première méthode consiste à encoder le contenu numérique avec un débit d'encodage constant ou CBR (pour « Constant Bit Rate », en anglais) selon laquelle tous les segments temporels encodés présentent la même taille. Un inconvénient de cette méthode est qu'elle alloue le même débit d'encodage à tout type de scène, qu'elle contienne une quantité importante de mouvements ou non, donc indépendamment de ses besoins réels en termes de débit. Avec cette méthode, les différents débits d'encodage, ou qualités, associés aux segments temporels dans le fichier de description correspondent à différentes valeurs de débits d'encodage constants CBR. Il en résulte que la qualité de l'expérience utilisateur peut être décevante sur des contenus numériques présentant des scènes d'action, pour une consommation de bande passante globalement importante.

On connaît aussi une deuxième méthode qui applique au contenu numérique un débit d'encodage variable ou VBR (pour « Variable Bit Rate », en anglais), selon laquelle les segments temporels sont encodés avec un débit moyen ABR (pour « Average Bit Rate », en anglais) sans dépasser un débit maximal prédéterminé PCR (pour « Peak Cell Rate », en anglais). Un avantage de cette méthode est qu'elle permet d'adapter le débit d'encodage au contenu numérique, par exemple d'allouer plus de débit à une scène d'action qu'à une scène présentant peu de mouvements. Selon cette deuxième méthode, les différents débits d'encodage, ou qualités, associés aux segments temporels dans le fichier de description peuvent soit correspondre aux valeurs de débits moyens d'encodage ABR de chaque version disponible, soit correspondre aux valeurs de débits maximaux d'encodage PCR de chaque version disponible. Lorsqu'on indique des débits d'encodage moyens ABR dans le fichier de description, on laisse la possibilité au client de sélectionner un segment dont le débit d'encodage effectif sera supérieur au débit moyen indiqué. On privilégie donc une amélioration de la qualité du contenu numérique téléchargé, et donc de l'expérience utilisateur, la consommation de bande passante étant environ la même que pour la première méthode CBR. En revanche, lorsqu'on indique des débits maximaux PCR, du fait que tous les segments temporels bénéficieront au mieux d'un débit d'encodage inférieur au débit maximal PCR de leur version, on privilégie une diminution de la consommation de bande passante, favorable au fournisseur de service, au détriment de la qualité du contenu numérique téléchargé par le client.

Ainsi, un fournisseur de service de téléchargement progressif adaptatif qui souhaite remplacer une solution de téléchargement progressif adaptatif basée sur un débit d'encodage constant CBR par une solution basée sur un débit d'encodage variable VBR, se trouve face à un choix stratégique difficile entre proposer une offre améliorée à ses clients et économiser des ressources réseau.

Il existe donc un besoin d'une technique de gestion du téléchargement progressif adaptatif d'un contenu numérique, qui permette à un fournisseur de service d'optimiser la consommation de bande passante par ce service, sans préjudice pour la qualité de l'expérience utilisateur.

Il existe en outre un besoin d'une technique qui s'adapte plus finement à la bande passante de l'utilisateur, en tirant notamment avantage des spécificités techniques du téléchargement adaptatif progressif.

L'invention vient améliorer la situation.

### Présentation de l'invention

L'invention répond à ce besoin en proposant un procédé de gestion du téléchargement progressif et adaptatif d'un contenu numérique au sein d'un terminal lecteur de flux multimédia connecté à un réseau de communication, ledit contenu numérique étant associé à un fichier de description dudit contenu numérique, comprenant une liste de segments temporels dudit contenu associés chacun à plusieurs débits d'encodage correspondant à plusieurs qualités, ledit débit d'encodage étant associé pour ladite qualité à une résolution dudit contenu.

Ledit procédé comprend :
- une obtention d'une vitesse de connexion au réseau de communication, déterminée à partir d'une taille et d'un temps de téléchargement d'au moins un segment temporel déjà téléchargé, et
- une sélection, pour au moins un prochain segment temporel à télécharger, d'une qualité maximale du contenu, en fonction de la vitesse de connexion et d'un rapport, dit facteur de gain, entre un débit d'encodage réel dudit segment temporel déjà téléchargé et un débit d'encodage correspondant à la qualité associée audit segment temporel dans le fichier de description.

Ainsi, l'invention repose sur une approche tout à fait nouvelle et inventive de la gestion du téléchargement progressif adaptatif d'un contenu numérique au sein d'un terminal lecteur de flux multimédia connecté à un réseau de communication. Plus particulièrement, l'invention propose un nouveau mode de sélection de la qualité d'un segment temporel à télécharge, qui prend en compte non seulement la vitesse de connexion au réseau du terminal lecteur, mais aussi un rapport entre le débit d'encodage réel d'au moins un segment temporel déjà téléchargé et sa qualité indiquée dans le fichier de description. Ainsi, si le débit d'encodage réel d'un ou plusieurs segments temporels déjà téléchargés s'avère plus faible que leur débit d'encodage théorique, l'invention en fait profiter l'utilisateur pour le prochain segment temporel à télécharger, en sélectionnant une qualité plus élevée que celle qu'il aurait choisie sur la base de la vitesse de connexion seule. De la sorte, l'invention réalise une gestion plus fine du téléchargement progressif et adaptatif d'un contenu qui permet à l'utilisateur d'accéder à la meilleure qualité possible.

Selon un aspect de l'invention, la vitesse de connexion est comparée à un seuil prédéterminé et l'étape de sélection est exécutée si la vitesse de connexion est inférieure audit seuil prédéterminé. La mise en œuvre du nouveau mode de sélection de la qualité d'un prochain segment temporel à télécharger est ainsi conditionnée au positionnement de la vitesse de connexion du terminal lecteur au réseau de communication par rapport à un seuil prédéterminé. Plus précisément, l'invention propose de le déclencher, lorsque cette vitesse de connexion est inférieure à ce seuil,
De la sorte, les utilisateurs dont la vitesse de connexion est faible et qui ne peuvent en général accéder qu'à une version basse qualité du contenu numérique, bénéficient du nouveau mode de sélection proposé par l'invention et de ce fait téléchargent un contenu présentant un niveau de qualité améliorée. L'impact de l'invention sur leur expérience utilisateur est immédiatement perceptible et ressenti positivement.

Avantageusement, le seuil prédéterminé est fixé à une valeur permettant de distinguer un premier groupe d'utilisateurs abonnés à l'ADSL bas débit ou plus généralement via une technologie d'accès au réseau à bas débit, d'un deuxième groupe d'utilisateurs abonnés à l'ADSL haut débit ou encore mieux à la fibre, qui accèdent déjà à la qualité maximale disponible pour télécharger un contenu numérique. Par exemple, le seuil prédéterminé est choisi égal à 5 Mb/s.

Selon un autre aspect de l'invention, si la vitesse de connexion est supérieure au seuil prédéterminé, le procédé comprend une sélection d'une qualité maximale du contenu en fonction de la seule vitesse de connexion.

Pour les utilisateurs qui bénéficient d'une bonne connexion au réseau et accèdent déjà à un contenu de qualité très acceptable, voire maximale, le nouveau mode de sélection n'est pas mis en œuvre, ce qui permet au fournisseur du service d'économiser de la bande passante, sans préjudice pour leur expérience utilisateur.

Selon un autre aspect de l'invention, la sélection d'une qualité pour au moins un prochain segment temporel à télécharger comprend en outre, lorsque la vitesse de connexion est inférieure audit seuil prédéterminé :
- une pondération des qualités associées aux segments temporels dans le fichier de description par le facteur de gain ;
- une comparaison des qualités pondérées à la vitesse de connexion, la qualité dont la valeur pondérée est à la fois inférieure à et la plus proche de la vitesse de connexion, étant choisie.

Selon encore un autre aspect de l'invention, le procédé comprend un moyennage du facteur de gain sur une pluralité de segments temporels successivement téléchargés.

Un avantage est de lisser la valeur du facteur de gain pour le rendre moins sensible aux écarts de débit entre deux segments temporels consécutifs. Un facteur de gain lissé procure ainsi plus de stabilité à l'algorithme de gestion du téléchargement en évitant les sauts intempestifs d'une qualité à l'autre.

Selon encore un autre aspect de l'invention, ledit contenu numérique est encodé avec un débit d'encodage variable et ledit débit d'encodage théorique associé à un segment temporel dans le fichier de description est un débit maximal autorisé.

L'invention s'applique tout particulièrement au mode de téléchargement progressif adaptatif à débit variable VBR, selon lequel le fichier de description associe aux segments temporels une indication de qualité qui correspond à leur débit d'encodage maximal PCR. En effet, dans ce cas, les tests réalisés en production sur un contenu vidéo « live » montrent un facteur de gain d'une valeur moyenne de ½. Le débit d'encodage réel mesuré des segments temporels est donc inférieur au débit d'encodage maximal PCR indiqué d'environ 50%. Un avantage du nouveau mode de sélection d'une qualité selon l'invention est de faire bénéficier de cette marge à l'utilisateur du service de téléchargement. La qualité restituée à l'utilisateur est donc meilleure pour une consommation de bande passante inchangée par rapport à un mode de téléchargement à débit fixe CBR.

Selon encore un autre aspect de l'invention, ledit contenu numérique est encodé avec un débit d'encodage fixe et les qualités associées à un segment temporel dans le fichier de description sont des débits d'encodage moyens.

Un avantage de l'invention est qu'elle s'applique aussi à un mode de téléchargement progressif à débit constant CBR, selon lequel le fichier de description associe aux segments temporels une indication de qualité qui correspond à leur débit d'encodage moyen ABR. En effet, dans ce deuxième cas, le facteur de gain vaudra environ 1, si bien que l'invention n'aura pas d'impact sur le résultat de la sélection, qui sera inchangé par rapport à celui de l'art antérieur. Un intérêt de l'invention est sa polyvalence. Il n'est donc pas nécessaire de prévoir un test préalable de détection du mode de téléchargement utilisé avant d'exécuter l'invention, du fait que l'invention s'y adapte nativement. Selon encore un autre aspect de l'invention, ledit contenu numérique est encodé avec un débit d'encodage variable et les qualités associées à un segment temporel dans le fichier de description sont des débits d'encodage moyens.

Un avantage de l'invention est qu'elle s'applique aussi à un mode de téléchargement progressif à débit variable VBR, selon lequel le fichier de description associe aux segments temporels une indication de qualité qui correspond à leur débit d'encodage moyen ABR, au lieu du débit maximal autorisé PCR. Dans cette configuration, le fournisseur de service fait le choix de ne pas diminuer la charge réseau, mais seulement d'améliorer la qualité du contenu restituée au client, lorsque c'est possible. En effet, il pourra arriver que le facteur de gain prenne des valeurs supérieures à 1, notamment pour un segment temporel correspondant à une scène très animée, coûteuse à encoder. Il en résulte que l'application de ce facteur de gain aux qualités indiquées dans le manifeste pourra avoir pour effet de les majorer et que la qualité effectivement sélectionnée sera inférieure à celle qui aurait été choisie selon un mode de sélection classique. Ainsi, on évite de bloquer la lecture du contenu numérique ce qui garantit sa fluidité. En effet, pour une restitution fluide, le terminal lecteur ne doit pas mettre plus de temps à télécharger les segments temporels qu'à les lire. Or, les segments codant une scène animée sont plus longs à télécharger que la moyenne et encombrent davantage la mémoire tampon du terminal lecteur. L'asservissement procuré par l'invention permet donc de préserver la qualité de la restitution et donc de l'expérience utilisateur.

L'invention concerne également un produit programme d'ordinateur comprenant des instructions de code de programme pour la mise en œuvre d'un procédé de gestion du téléchargement progressif et adaptatif d'un contenu numérique au sein d'un terminal lecteur de flux multimédia connecté à un réseau de communication selon l'invention, tel que décrit précédemment, lorsqu'il est exécuté par un processeur.

L'invention vise également un support d'enregistrement lisible par un ordinateur sur lequel sont enregistrés les programmes d'ordinateur tels que décrits ci-dessus.

Un tel support d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que le programme d'ordinateur qu'il contient est exécutable à distance. Le programme selon l'invention peut être en particulier téléchargés sur un réseau par exemple le réseau Internet.

Alternativement, le support d'enregistrement peut être un circuit intégré dans lequel le programme est incorporé, le circuit étant adapté pour exécuter ou pour être utilisé dans l'exécution du procédé de gestion précité.

L'invention concerne aussi un dispositif de gestion du téléchargement progressif adaptatif d'un contenu numérique au sein d'un terminal lecteur de flux multimédia connecté à un réseau de communication, ledit contenu numérique étant associé à un fichier de description dudit contenu numérique, comprenant une liste de segments temporels dudit contenu associés chacun à plusieurs débits d'encodage correspondant à plusieurs qualités, ledit débit d'encodage étant associé pour ladite qualité à une résolution dudit contenu.

Ledit dispositif est configuré pour :
- obtenir une vitesse de connexion au réseau de communication à partir d'une taille et d'un temps de téléchargement d'au moins un segment temporel déjà téléchargé, et
- sélectionner pour au moins un prochain segment temporel à télécharger, une qualité maximale du contenu numérique, en fonction de la vitesse de connexion et d'un rapport, dit facteur de gain, entre un débit d'encodage réel dudit segment temporel déjà téléchargé et un débit d'encodage correspondant à la qualité associée audit segment temporel dans le fichier de description. Avantageusement, ledit dispositif est configuré pour mettre en œuvre le procédé de gestion d'un du téléchargement progressif et adaptatif d'un contenu numérique précité, selon ses différents modes de réalisation.

Avantageusement, ledit dispositif est intégré dans un terminal lecteur de flux multimédia, configuré pour se connecter à un réseau de communication et pour décoder un flux multimédia. Il s'agit par exemple d'un décodeur TV, par exemple de type clé HDMI, connecté à un téléviseur ou d'un terminal utilisateur, de type téléphone intelligent, tablette ou ordinateur.

Le terminal lecteur de flux multimédia, le dispositif de gestion du téléchargement progressif et adaptatif d'un contenu numérique et le programme d'ordinateur correspondants précités présentent au moins les mêmes avantages que ceux conférés par le procédé précité selon les différents modes de réalisation de la présente invention.

### Brève description des figures

D'autres buts, caractéristiques et avantages de l'invention apparaîtront plus clairement à la lecture de la description suivante, donnée à titre de simple exemple illustratif, et non limitatif, en relation avec les figures, parmi lesquelles :
**[****Fig 1****]** : présente un exemple d'architecture de téléchargement progressif et adaptatif sur un réseau domestique basée sur l'utilisation du streaming adaptatif selon un mode de réalisation de l'invention ;
**[****Fig 2****] :** illustre de façon schématique la structure matérielle d'un terminal lecteur de flux multimédia intégrant un dispositif de gestion d'un téléchargement progressif et adaptatif d'un contenu numérique selon un mode de réalisation de l'invention ;
**[****Fig 3****]** : décrit sous forme d'un logigramme les étapes d'un procédé de gestion d'un téléchargement progressif et adaptatif d'un contenu numérique par un terminal lecteur de flux multimédia, associé à un terminal de restitution, selon un premier exemple de réalisation de l'invention ;
**[****Fig 4****] :** décrit sous forme d'un logigramme les étapes d'un procédé de gestion d'un téléchargement progressif et adaptatif d'un contenu numérique par un terminal lecteur de flux multimédia, associé à un terminal de restitution, selon un deuxième exemple de réalisation de l'invention ; et
**[****Fig 5****] :** illustre de façon schématique la structure matérielle d'un dispositif de gestion d'un téléchargement progressif et adaptatif d'un contenu numérique selon un autre mode de réalisation de l'invention.

### Description détaillée de l'invention

Le principe général de l'invention repose sur l'estimation par le terminal lecteur de flux multimédia d'une vitesse de connexion au réseau de communication et la sélection d'une qualité d'un prochain segment temporel du contenu numérique à télécharger en fonction non seulement de cette vitesse de connexion, mais aussi d'un rapport, dit facteur de gain entre un débit d'encodage réel mesuré par le terminal lecteur et la qualité du contenu numérique associée au segment temporel dans le fichier de description.

Avantageusement, ce nouveau mode de sélection d'une qualité pour le prochain segment temporel à télécharger est déclenché, lorsque la vitesse de connexion au réseau dont bénéficie l'utilisateur est inférieure à un seuil prédéterminé.

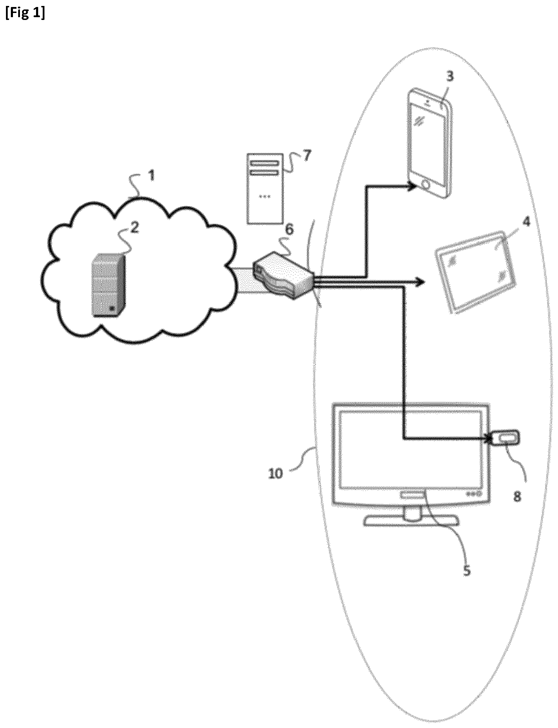

On présente désormais, en relation avec la **figure 1****,** une architecture de téléchargement progressif et adaptatif dans un réseau domestique basée sur l'utilisation du streaming adaptatif selon l'invention.

Le terminal 3, par exemple un téléphone intelligent de type « smartphone », le terminal 4, par exemple une tablette, et le terminal 8, par exemple un décodeur TV tel qu'une clé HDMI connectée à un téléviseur 5, se trouvent, dans cet exemple, situés dans un réseau local (LAN, 10) piloté par une passerelle domestique 6 (pour « home gateway », en anglais). Le contexte du réseau local est donné à titre d'exemple et pourrait être transposé aisément à un réseau Internet de type « best effort », un réseau d'entreprise, etc.

Un serveur de contenus numériques « HAS » 2, ou serveur de contenus 2, se trouve selon cet exemple dans le réseau étendu (WAN, 1) mais il pourrait indifféremment être situé dans le réseau local (LAN, 10), par exemple dans la passerelle domestique 6 ou tout autre équipement capable d'héberger un tel serveur de contenus. Le serveur de contenus 2 reçoit par exemple des chaînes de contenus de télévision numérique en provenance d'un réseau de télévision diffusée, non représenté, et les met à disposition des terminaux clients.

Les terminaux clients 3, 4 et la clé HDMI 8 en association avec le téléviseur 5, peuvent entrer en communication avec le serveur de contenus 2 pour recevoir un ou plusieurs contenus (films, documentaires, séquences publicitaires, etc.).

Il est fréquent, dans ce contexte client-serveur, de recourir, pour échanger les données entre les terminaux 3, 4 et 8 et le serveur de contenus 2, à une technique de téléchargement progressif adaptatif, en anglais « adaptive streaming », abrégé en HAS basée sur le protocole HTTP. Ce type de technique permet notamment d'offrir une bonne qualité de contenus à l'utilisateur en tenant compte des variations de bande passante qui peuvent se produire sur la liaison entre son terminal client 3, 4 et 8 et la passerelle de services 6, ou entre cette dernière et le serveur de contenus 2. Classiquement, différentes qualités peuvent être encodées pour le même contenu numérique, correspondant par exemple à différents débits. Plus généralement, on parlera de qualité pour se référer à une certaine résolution du contenu numérique (résolution spatiale, temporelle, niveau de qualité associée à la compression vidéo et/ou audio) associé à un certain débit d'encodage. Chaque version du contenu numérique encodée à un niveau de qualité particulier, est elle-même découpée par le serveur de contenus en segments temporels (ou « fragments » de contenu, en anglais « chunks », ces trois mots étant utilisés indifféremment dans l'ensemble de ce document).

La description des différentes versions disponibles pour un contenu numérique donné, ainsi que les segments temporels proprement dits, sont mis à la disposition du terminal lecteur de flux. L'ensemble de ces informations (qualités, taille et adresse Internet, par exemple sous la forme d'une adresse de type URI (pour « Universal Ressource Identifier », en anglais) des segments temporels, etc.) est en général regroupé dans un fichier de paramètres, dit fichier de description ou manifeste. On notera que ce fichier de paramètres peut être un fichier informatique ou un ensemble d'informations descriptives du contenu, accessible à une certaine adresse.

Les terminaux 3, 4 et 8 possèdent leurs propres caractéristiques en termes de capacité de décodage, d'affichage, etc. Dans un contexte de téléchargement adaptatif progressif, ils peuvent adapter leurs requêtes pour recevoir et décoder le contenu demandé par l'utilisateur à la qualité qui leur correspond au mieux. Dans notre exemple, si le contenu est disponible aux débits 1000 kb/s (kilobits par seconde) (Qualité 1, ou niveau 1, noté D1), 2 500 kb/s (D2), 5 000 kb/s (D3), 7 500 kb/s (D4) et si le terminal client dispose d'une bande passante de 10 000 kb/s, il peut demander n'importe quelle version du contenu numérique pourvu que son débit soit inférieur à cette limite, par exemple 5 000 kb/s. De manière générale, on note « Ci@Dj » le segment temporel numéro i avec la qualité j (par exemple le j-ième niveau Dj de qualité décrit dans le fichier de description) du contenu C.

La passerelle de services 6 est dans cet exemple une passerelle domestique qui assure le routage des données entre le réseau étendu 1 et le réseau local 10 et gère les contenus numériques en assurant notamment leur réception en provenance du réseau étendu 1.

Les terminaux 3, 4 et 8 reçoivent les données en provenance du réseau étendu 1, via la passerelle domestique 6, et assurent leur décodage, et éventuellement leur restitution sur leur propre dispositif d'affichage ou écran, ou dans l'exemple de la clé HDMI 8 sur le téléviseur 5 associé. Dans une variante, les terminaux 3 et 4 transmettent ces données à la clé HDMI 8 pour restitution sur l'écran du téléviseur 5. Dans une autre variante, le décodeur peut se trouver localisé en un autre point du réseau étendu 1 ou local 10, notamment au niveau d'un élément décodeur de type STB (de l'anglais Set-Top-Box) (non représenté) associé à un téléviseur 5.

Dans l'exemple de la **figure 1****,** pour visualiser un contenu, les terminaux 3, 4 ou 8 interrogent tout d'abord la passerelle de service 6 pour obtenir une adresse du document de description 7 d'un contenu numérique C souhaité. La passerelle de service 6 répond en fournissant au terminal l'adresse du fichier de description 7. Dans la suite, on supposera que ce fichier est un fichier de type manifeste selon la norme MPEG-DASH (noté « C.mpd ») et on le désignera indifféremment, selon le contexte, par l'expression « fichier de description » ou « manifeste ».

Alternativement, ce fichier peut être récupéré directement auprès d'un serveur Internet local ou externe au réseau local, ou, lorsqu'il a déjà été obtenu, auprès de la passerelle de service ou sur le terminal.

Un exemple de fichier manifeste ou MPD, conforme à la norme MPEG-DASH, et comportant la description de contenus disponibles C1 et C2 dans trois qualités différentes (N1 = 512 kb/s, N2 = 1024 kb/s, N3 = 2048 kb/s) des contenus fragmentés est présenté en **Annexe 1.** Ce fichier manifeste simplifié décrit des contenus numériques dans une syntaxe XML (de l'anglais « eXtended Markup Language »), comprenant une liste de contenus sous forme de segments temporels classiquement décrits entre une balise ouvrante (<SegmentList>) et une balise fermante (</SegmentList>). La découpe en segments temporels permet notamment de s'adapter finement aux fluctuations de la bande passante. Chaque segment temporel correspond à une certaine durée (champ « duration ») et est disponible à plusieurs niveaux de qualité. Le fichier manifeste permet de générer l'adresse (URL - Uniform Resource Locator) de chaque segment temporel à partir des informations qui lui sont associées dans ce fichier. Cette génération est faite dans cet exemple à l'aide des éléments « BaseURL » (« HTTP://server.com») qui indique l'adresse du serveur de contenus et « SegmentURL » qui liste les parties complémentaires des adresses des différents segments temporels :
- « C1_512kb_1.mp4 » pour le premier segment temporel du contenu « C1 » à 512 kilobits par seconde (« kb ») au format MPEG-4 (« mp4 »),
- « C1_512kb_2.mp4 » pour le second segments temporel,
- etc.

Une fois qu'elle dispose des adresses de segments temporels correspondant au contenu souhaité, la passerelle de service 6 procède à l'obtention des segments temporels via un téléchargement à ces adresses. On notera que ce téléchargement s'opère ici, traditionnellement, au travers d'une URL HTTP, mais qu'elle pourrait également s'opérer au travers d'une adresse universelle ou URI (de l'anglais, « Uniform Resource Identifier ») décrivant un autre protocole (dvb://monsegmentdecontenu par exemple).

On suppose ici que la clé HDMI 8 est connectée au téléviseur 5 par branchement sur le port HDMI de ce dernier, et qu'elle est utilisée pour restituer, sur l'écran du téléviseur 5, un contenu Cn (n étant un entier représentant le n-ième contenu visualisé), décrit dans un fichier manifeste 7. On notera que le contenu Cn peut être un programme télévisuel diffusé en direct ou en différé (comme par exemple un film, une série, une émission télévisuelle, une séquence publicitaire etc....), ou une vidéo à la demande, ou tout autre contenu numérique multimédia.

Dans un exemple, un utilisateur souhaite visualiser un contenu numérique multimédia, tel qu'un film, sur son téléviseur 5 connecté à une clé HDMI 8. La clé HDMI 8 est connectée en WiFi® directement à la passerelle résidentielle 6. En variante, la clé HDMI 8 pourrait également être connectée en WiFi® à un autre périphérique nomade du réseau domestique, par exemple à la tablette 4 ou au téléphone intelligent 3, par l'intermédiaire duquel elle pourrait accéder au réseau de communication étendu 1. La clé HDMI 8 peut également être pilotée par l'utilisateur au moyen du téléphone intelligent 3, sur lequel est installée une application logicielle de commande de la clé HDMI 8.

Les segments temporels de contenu obtenus par la passerelle résidentielle 6 sont par exemple transmis en WiFi® à la clé HDMI 8, qui pilote leur affichage sur l'écran du téléviseur 5, pour restitution à l'utilisateur.

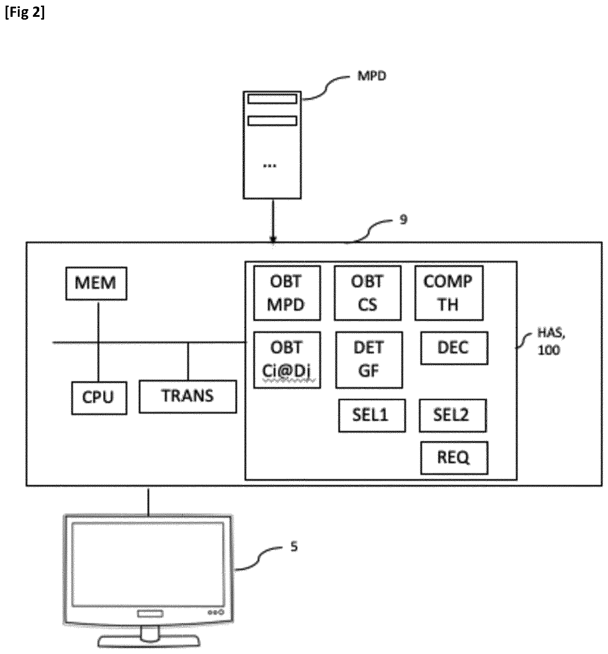

La **figure 2** représente une architecture d'un terminal lecteur de flux multimédia 9, ou lecteur de flux 9, selon un mode de réalisation de l'invention. Ce terminal lecteur de flux 9 peut être par exemple la clé HDMI 8, ou le téléphone intelligent 3 de la **figure 1****.** En variante, ce lecteur de flux 9 est intégré au niveau d'un élément de type STB associé à un téléviseur (non représenté). On décrit plus spécifiquement dans la suite l'exemple de la clé HDMI 8.

Le terminal lecteur de flux 9 comprend, classiquement, des mémoires MEM associées à un processeur CPU. Les mémoires peuvent être de type ROM (de l'anglais « Read Only Memory ») ou RAM (de l'anglais « Random Access Memory ») ou encore Flash. Le lecteur de flux multimédia 9 selon un mode de réalisation de l'invention peut aussi contenir un module TRANS de génération d'une commande d'affichage du contenu téléchargé à un dispositif de restitution du contenu, par exemple le téléviseur 5, et d'autres modules (non représentés) comme un disque dur pour le stockage des segments temporels du contenu numérique, un module de contrôle d'accès aux contenus, un module de traitement des commandes reçues d'une télécommande, ou d'une tablette, d'un smartphone sur lesquels est installée l'application de pilotage du lecteur de flux 9, grâce à laquelle l'utilisateur peut en contrôler le fonctionnement, etc.

Le lecteur de flux multimédia 9 comprend en outre un dispositif de téléchargement progressif adaptatif HAS, 100 configuré pour demander un téléchargement progressif d'un ou plusieurs contenus numériques Cn à l'une des qualités proposées dans son fichiers de description Mn (n étant un entier non nul représentant le n-ième fichier manifeste associé au n-ième contenu noté Cn). Ce fichier de description Mn peut être enregistré par exemple dans les mémoires MEM du lecteur de flux multimédia 9 ou sur un serveur distant.

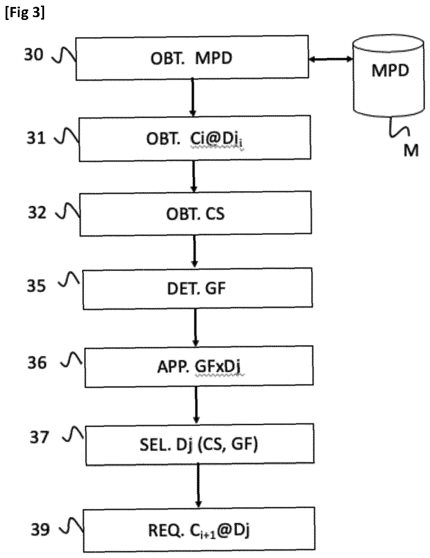

Le dispositif 100 comprend un module d'obtention OBT. MPD d'un fichier de description d'un contenu numérique, un module OBT. Ci@Dj, avec i = 1 t j = 1, d'au moins un premier segment temporel du contenu numérique, un module OBT. CS d'obtention d'une vitesse de connexion CS du terminal lecteur 9 au réseau de communication à partir d'une taille et d'un temps de téléchargement du au moins un segment temporel déjà téléchargé. Selon un premier mode de réalisation de l'invention, le dispositif 100 comprend en outre un module de sélection SEL1 d'une qualité Dj pour un prochain segment temporel à télécharger en fonction de la vitesse de connexion CS et d'un rapport, dit facteur de gain, entre un débit d'encodage réel dudit segment temporel déjà téléchargé et sa qualité associée dans le fichier de description. Il comprend aussi un module REQ de requête du prochain segment temporel à la qualité choisie. Le dispositif 100, HAS met ainsi en œuvre le procédé de gestion selon l'invention qui sera détaillé ci-après en relation avec la figure 3.

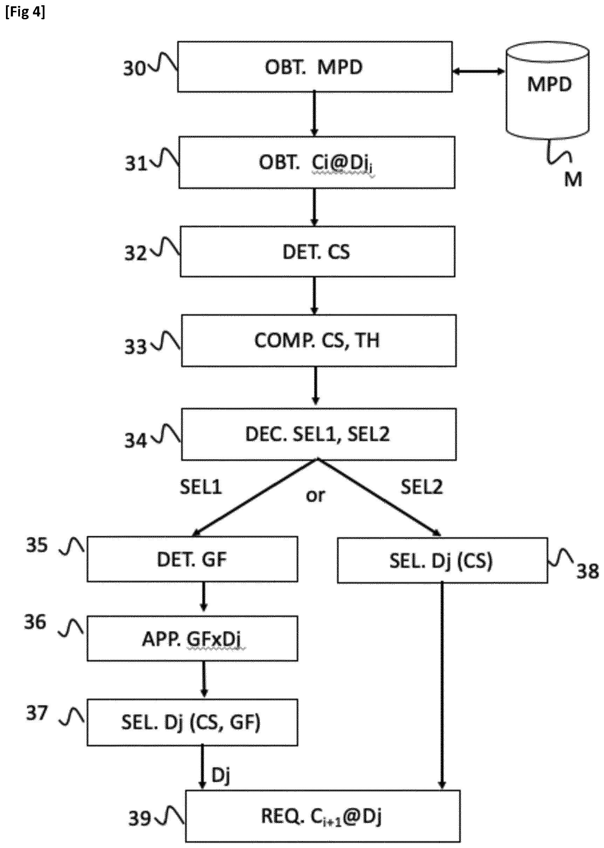

Selon un autre mode de réalisation, le dispositif 100 comprend en outre un module COMP de comparaison de la vitesse de connexion CS déterminée à un seuil TH prédéterminé, un module DEC de décision d'un mode de sélection d'une qualité d'un prochain segment temporel à télécharger en fonction du résultat de cette comparaison. Lorsque la vitesse de connexion déterminée est inférieure au seuil, le dispositif 100 est configuré pour mettre en œuvre le premier module de sélection SEL1 d'une qualité d'un prochain segment temporel à télécharger, configuré pour sélectionner la qualité du prochain segment temporel à télécharger en fonction de la vitesse de connexion CS et d'un rapport, dit facteur de gain, entre un débit d'encodage réel dudit segment temporel déjà téléchargé et sa qualité associée dans le fichier de description. Sinon il pilote l'exécution d'un deuxième module de sélection SEL2, configuré pour sélectionner la qualité du prochain segment en fonction de la seule vitesse de connexion CS. Il met ainsi en œuvre le procédé de gestion qui sera détaillé ci-après en relation avec la figure 4.

Dans l'exemple où le terminal lecteur de flux 9 est la clé HDMI 8, celle-ci ne contient généralement pas de module d'interface Entrée/Sortie E/S, et c'est le module d'interface E/S du smartphone 3 de l'utilisateur ou de sa tablette 4, ou du téléviseur 5, qui est utilisé par ce dernier pour choisir par exemple son contenu.

On présente désormais, en relation avec **la** **figure 3****,** sous une forme de logigramme, un premier exemple de mise en œuvre d'un procédé de gestion d'un téléchargement progressif et adaptatif d'un contenu numérique HAS par un terminal lecteur de flux multimédia, selon un mode de réalisation de l'invention.

Dans cet exemple, le terminal lecteur de flux 9 selon la **figure 2** est la clé HDMI 8, qui pilote la gestion du téléchargement progressif et adaptatif du contenu numérique multimédia et sa restitution sur le téléviseur 5 associé. La clef HDMI 8 peut être pilotée via une télécommande du téléviseur 5 ou via une application logicielle de commande d'un téléphone intelligent 3 ou de la tablette 4.

Selon la méthode classique de téléchargement en HAS, préalablement à la restitution d'un contenu numérique C, l'utilisateur, via l'association du téléviseur 5 et de la clé HDMI 8, envoie une requête, qui transite par la passerelle domestique 6 (non représentée), indiquant le contenu choisi au serveur de contenu « HAS » 2.

Le serveur de contenu « HAS » 2 envoie alors en réponse à cette requête un flux de données représentatif du contenu choisi via la passerelle domestique 6 (non représentée). Le serveur de contenu « HAS » 2 expose un contenu numérique C1 sous forme de segments temporels, ou « chunks » Ci@Dj encodés à différents débits d'encodage Dj, où l'indice i désigne un identifiant temporel, ou position, du « chunk » Ci@Dj.

Selon l'art antérieur, le module client HAS est chargé de venir récupérer les segments temporels auprès du serveur de contenu « HAS » 2 en choisissant la qualité vidéo Dj en fonction de la ressource réseau disponible. Il existe de nombreux algorithmes permettant au module client HAS de choisir le débit d'encodage du prochain fragment vidéo à télécharger selon des stratégies sont plus ou moins sécuritaires ou agressives. On rappelle cependant que, le plus souvent, le principe général de tels algorithmes repose sur le téléchargement d'un premier fragment au débit d'encodage le plus faible proposé dans le manifeste, et sur l'évaluation du temps de récupération de ce premier fragment. Sur cette base, le module de téléchargement HAS détermine, en fonction de la taille du fragment et du temps mis pour le récupérer, une vitesse de connexion CS au réseau de communication. Il évalue ensuite, si cette vitesse de connexion lui permet de télécharger le segment temporel suivant à un débit d'encodage plus élevé que le premier. Certains algorithmes reposent sur une augmentation progressive du niveau de qualité des fragments de contenu téléchargés ; d'autres proposent des approches plus risquées, avec des sauts dans les niveaux des débits d'encodage des fragments successifs.

Dans un cas classique, si un segment temporel vidéo dure par exemple TS = 2 secondes, la récupération du segment temporel par le module HAS ne doit pas excéder TT = 2 secondes, afin de permettre une restitution sans interruption du contenu. Il convient donc pour le module HAS d'opérer le meilleur compromis entre une qualité de restitution, et donc un débit d'encodage, aussi élevés que possible, et le temps de téléchargement du segment temporel, qui doit être suffisamment faible pour permettre une restitution en continu sur le téléviseur 5 par exemple.

L'invention propose un nouveau procédé de gestion du téléchargement progressif et adaptatif d'un contenu numérique par le dispositif HAS, 100, qui va maintenant être détaillé.

Au cours d'une étape 30, le dispositif HAS, 100 récupère le fichier manifeste MPD afin de découvrir les segments temporels disponibles du contenu numérique C, et les différentes qualités vidéo Dj associées. Dans cet exemple, le contenu numérique C est par exemple proposé sous forme de fragments de durée 4s, avec un premier débit d'encodage D1 = 1 000 kb/s, un deuxième débit d'encodage D2 = 2 500 kb/s, un troisième débit d'encodage D3 = 5 000 kb/s, un quatrième débit d'encodage D4 = 7 500 kb/s et un cinquième débit d'encodage D5 = 10 000 kb/s. Il est par exemple stocké dans une mémoire M du dispositif 100, HAS.

Dans l'exemple considéré, on suppose que le dispositif HAS, 100 utilise un mode de téléchargement progressif et adaptatif à débit d'encodage variable VBR et que les qualités D1 à D4 indiquées dans le manifeste MPD représentent un débit d'encodage maximal PCR.

Au cours d'une étape 31, le dispositif HAS, 100 opère le téléchargement d'un premier segment temporel C1@Dj₁ à la plus faible qualité disponible Dj₁, avec j₁ =1, soit à un débit d'encodage de 1 000 kb/s ou 1Mb/s.

Une fois le téléchargement effectué, il détermine en 32 la taille S de ce premier segment temporel et le temps ou durée TT de son téléchargement. Il calcule ensuite une vitesse de connexion CS au réseau pour ce téléchargement, de la façon suivante : CS = S/TT.

En 35, le dispositif HAS, 100 calcule un débit d'encodage réel R du premier segment temporel téléchargé C1@Dj₁ à partir de la taille S de ce premier segment temporelle et de sa durée TS. Cette durée est connue, par exemple indiquée dans le manifeste MPD. On suppose qu'elle vaut TS = 2 s. On a donc R = S/TS.

Le dispositif HAS, 100 calcule ensuite un rapport, dit facteur de gain GF, entre ce débit d'encodage réel R du premier segment temporel et la qualité D1. On a GF = R/D1.

Dans l'exemple considéré, du fait que la qualité D1 représente un débit d'encodage maximal autorisé pour l'encodage des segments temporels du contenu numérique à cette qualité, le débit réel est nécessairement inférieur ou égal à D1. En moyenne, les inventeurs ont constaté qu'il était de 50% inférieur à D1. Il en résulte que le facteur de gain GF a une valeur inférieure à 1, par exemple de l'ordre de 0.4.

En 36, le dispositif HAS, 100 applique le facteur de gain GF aux qualités D1, D2,...DJ disponibles pour le prochain segment temporel du contenu C1, c'est-à-dire qu'il les pondère en les multipliant par ce facteur de gain GF.

En 37, il compare les qualités pondérées D1xGF, D2xGF,...DJxGF à la vitesse de connexion CS et choisit celle qui remplit à la fois les deux critères suivants :
- être inférieure à la vitesse de connexion CS ; et
- être la plus proche de la vitesse de connexion CS.

De la sorte, la plus grande qualité possible Dj est sélectionnée, en prenant en compte à la fois la vitesse de connexion CS du terminal lecteur 9 et le facteur de gain GF.

Avantageusement, les valeurs de vitesse de connexion CS déterminées pour chaque segment temporel peuvent être moyennées sur une fenêtre temporelle prédéterminée, comportant par exemple une dizaine de segments temporels précédemment téléchargés. Ceci permet d'obtenir une vitesse de connexion CS lissée et moins sensible aux perturbations locales.

De même, la détermination 35 du facteur de gain peut avantageusement s'appuyer sur plusieurs segments temporels déjà téléchargés. On obtient ainsi un facteur de gain moyenné ou lissé, donc moins sensible aux écarts de débit entre deux segments temporels consécutifs. Ce lissage est particulièrement intéressant dans le cas d'un téléchargement progressif et adaptatif en mode VBR, pour lequel les différentes qualités disponibles associées aux segments temporels du contenu C1 dans le fichier manifeste M1 indiquent le débit maximal d'encodage PCR. En effet, comme le mode débit variable VBR s'adapte au contenu, le débit d'encodage réel peut varier de façon significative d'un segment temporel au suivant, en fonction de la scène filmée et de la quantité de mouvement qu'elle contient. Ainsi, un facteur de gain lissé procure plus de stabilité à l'algorithme de gestion du téléchargement en évitant les sauts intempestifs d'une qualité à l'autre.

Les différents fragments téléchargés par le module client HAS sont ensuite transmis dans une étape 39 au téléviseur 5 via la clé HDMI 8 par exemple pour leur restitution à l'utilisateur.

Les étapes 31 à 37 sont ensuite répétées tant qu'il reste des segments temporels à télécharger pour le contenu numérique C.

On présente désormais, en relation avec **la** **figure 4****,** sous une forme de logigramme, un deuxième exemple de mise en œuvre d'un procédé de gestion d'un téléchargement progressif et adaptatif d'un contenu numérique HAS par un terminal lecteur de flux multimédia, selon un autre mode de réalisation de l'invention.

Dans ce deuxième exemple considéré, on suppose encore que le dispositif HAS, 100 utilise un mode de téléchargement progressif et adaptatif à débit d'encodage variable VBR et que les qualités D1 à D4 indiquées dans le manifeste MPD représentent un débit d'encodage maximal PCR.

Les étapes 31 et 32 sont inchangées.

En revanche, le procédé de gestion comprend une étape supplémentaire 33 de comparaison de la vitesse de connexion CS obtenue à un seuil TH prédéterminé. Par exemple, ce seuil est fixé à TH= 5000kb/s.

En 34, le dispositif HAS, 100 décide d'un mode de sélection SEL1, SEL2 d'une qualité d'au moins prochain segment temporel C1₂ en fonction du résultat de cette comparaison. Si la vitesse de connexion CS du terminal lecteur est inférieure au seuil TH, il choisit de mettre en œuvre un premier mode de sélection SEL1, mettant en œuvre la sélection d'une qualité Dj en fonction de la vitesse de connexion CS et d'un facteur de gain GF, qui vient d'être décrite en relation avec la figure 3. Les prochaines étapes du procédé, à savoir l'étape 35 de détermination d'un facteur de gain GF, suivie des étapes de pondération 36 et de sélection 37 d'une qualité Dj pour le prochain segment Ci+1@Dj à télécharger, sont inchangées et correspondent à celles de la figure 3.

Sinon, c'est-à-dire si la vitesse de connexion CS est supérieure ou égale au seuil TH, le dispositif HAS, 100 met en œuvre un deuxième mode de sélection SEL2 en 38.

Dans cet exemple, ce mode de sélection SEL2 est classique et connu de l'art antérieur. En 38, les qualités D1 à D4 disponibles pour le prochain segment temporel du contenu C sont comparées à la vitesse de connexion CS calculée en 32 et la qualité Dj est choisie selon les deux mêmes critères que précédemment :
- être inférieure à la vitesse de connexion CS ; et
- être la plus proche de la vitesse de connexion CS.

Selon ce mode SEL2, la qualité Dj choisie parmi les qualités disponibles dans le fichier M1 ne dépend donc que de la vitesse de connexion CS du terminal lecteur au réseau.

Les différents fragments téléchargés par le module client HAS sont ensuite transmis dans une étape 39 au téléviseur 5 via la clé HDMI 8 par exemple pour leur restitution à l'utilisateur.

Les étapes 31 à 39 sont ensuite répétées tant qu'il reste des segments temporels à télécharger pour le contenu numérique C.

A titre illustratif, on suppose que la vitesse de connexion CS calculée en 32 par le dispositif HAS, 100 après téléchargement du premier segment temporel vaut 4 Mb/s. Le premier mode de sélection SEL1 est donc choisi. On suppose que le facteur de gain GF déterminé en 35₁ vaut 1.4. En divisant la qualité D3= 7.5Mb/s par le facteur de gain GF, on obtient 7.5x0.4 = 3Mb/s. Du fait de la pondération appliquée par le facteur de gain, la valeur pondérée cette qualité D3 devient inférieure à la vitesse de connexion CS et donc accessible pour le terminal lecteur. Elle est donc choisie par le dispositif HAS, 100 en 35₃ pour le téléchargement du prochain segment temporel. Selon le deuxième mode de sélection SEL2, on compare les qualités D1, D2, D3, D4 disponibles à la vitesse de connexion CS qui vaut 4 Mb/s et on choisit la qualité D2 = 2.5 Mb/s.

Ainsi, le premier mode de sélection SEL1 de l'invention permet de choisir une qualité Dj supérieure à celle autorisée par le deuxième mode de sélection SEL2 de l'art antérieur.

Autrement dit, le premier mode de sélection SEL1 offre une meilleure qualité du contenu téléchargé et donc à une expérience utilisateur améliorée, pour une consommation de bande passante inchangée pourvu que la méthode de téléchargement progressif en mode VBR soit basée sur un débit constant ABR du même ordre que le débit d'encodage moyen CBR d'une méthode de téléchargement progressif en mode CBR, tandis que le deuxième mode de sélection SEL2 garantit une économie de consommation de bande passante pour une qualité de contenu téléchargé en moyenne équivalente à celle produite par une méthode de téléchargement progressif en mode CBR avec un débit d'encodage moyen de même valeur.

Ainsi, selon ce deuxième mode de réalisation de l'invention, le dispositif HAS, 100 exploite la vitesse de connexion CS pour arbitrer entre le nouveau mode de sélection SEL1 d'une qualité, plus favorable à l'utilisateur et un autre mode de sélection SEL2, par exemple le mode de sélection classiquement utilisé, plus favorable au fournisseur de service.

On comprend que le choix de la valeur du seuil est stratégique. Plus elle est élevée, plus la part des utilisateurs éligibles au premier mode de sélection SEL1 augmente, ce qui représente un coût accru en termes de ressources de bande passante pour l'opérateur ou le fournisseur de services. Au contraire, plus elle est basse, plus le fournisseur de service limite la part des utilisateurs éligibles au premier mode de sélection SEL1, et donc plus l'économie de ressources de bande passante est importante.

Aujourd'hui, une valeur de seuil choisie autour de TH = 5 Mb/s semble constituer un bon compromis pour un fournisseur de service, qui voudrait à la fois faire bénéficier à ses clients d'une offre plus qualitative, tout en optimisant l'utilisation de ses ressources réseau. En effet, cette valeur de seuil TH permet de distinguer un premier groupe d'utilisateurs abonnés à l'ADSL (de l'anglais « Asymmetric Digital Subscriber Line ») bas débit ou plus généralement via une technologie d'accès au réseau à bas débit, donc qui n'accèdent généralement qu'à la qualité minimale disponible d'un contenu numérique, d'un deuxième groupe d'utilisateurs abonnés à l'ADSL haut débit ou encore mieux à la fibre, qui accèdent déjà à la qualité maximale disponible pour télécharger un contenu numérique. Pour les utilisateurs du premier groupe, le simple fait d'accéder au niveau de qualité supérieure serait déjà perceptible avec un impact positif sur leur expérience. Au contraire, pour les utilisateurs du deuxième groupe qui bénéficient déjà de la meilleure qualité de téléchargement, la mise en œuvre de l'invention ne serait pas perceptible, alors qu'elle permettrait au fournisseur de services d'économiser des ressources réseau.

Ainsi, l'invention est particulièrement adaptée à un mode de téléchargement progressif et adaptatif basée sur un débit d'encodage variable VBR, selon lequel les qualités associées aux segments temporels correspondent au débit d'encodage maximal PCR.

On notera toutefois que son champ d'application n'est pas limité à ce mode. En effet, elle s'applique aussi à un mode de téléchargement progressif et adaptatif basée sur un débit d'encodage constant CBR. Dans ce cas, les qualités Dj indiquées dans le manifeste MPD du contenu C correspondent au débit moyen d'encodage CBR. Ce débit moyen est obtenu sur une longue période temporelle, par exemple la durée complète de la vidéo.

Du fait que le débit d'encodage appliqué au contenu numérique est constant, le facteur de gain GF prendra des valeurs très proches de 1, ce qui fait que son application aux valeurs de qualités Dj aura peu ou n'aura pas d'impact du tout sur la décision finale prise par le dispositif HAS, 100.

L'invention s'applique aussi à un mode de téléchargement progressif et adaptatif basé sur un débit d'encodage variable VBR, selon lequel les qualités associées aux segments temporels correspondent au débit d'encodage moyen ABR. Ce mode, comme déjà évoqué, n'a pas d'impact sur la charge réseau endossée par le fournisseur de services, par rapport au mode de téléchargement progressif et adaptatif basé sur un débit d'encodage constant de même valeur que ABR.

Selon ce mode, le facteur de gain GF de l'invention pourra prendre des valeurs nettement inférieures à 1, par exemple pour des segments correspondant à des scènes très animées dont l'encodage coûte beaucoup plus cher que le débit moyen. En revanche, le facteur de gain GF restera supérieur à la valeur du rapport ABR/PCR. On comprend que les qualités Dj indiquées dans le manifeste MPD du contenu C seront majorées du fait de l'application du facteur de gain GF supérieur à 1, ce qui pourra entraîner la sélection d'une qualité pour le téléchargement d'un prochain segment qui est inférieure à celle qu'aurait sélectionné un mode de sélection classique, tel que le deuxième mode SEL2.

Un avantage est qu'on évite ainsi de bloquer la lecture du contenu numérique ce qui garantit sa fluidité. En effet, pour une restitution fluide, le terminal lecteur ne doit pas mettre plus de temps à télécharger les segments temporels qu'à les lire. Or, les segments codant une scène animée sont plus longs à télécharger que la moyenne et encombrent davantage la mémoire tampon du terminal lecteur.

L'asservissement procuré par l'invention permet donc de préserver la qualité de la restitution et donc de l'expérience utilisateur.

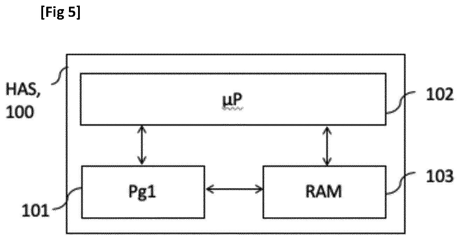

On présente enfin, en relation avec la **figure 5****,** un autre exemple de structure matérielle d'un dispositif 100, HAS de gestion du téléchargement progressif adaptatif d'un contenu numérique au sein d'un terminal lecteur de flux multimédia connecté à un réseau de communication, comprenant, comme illustré par la **figure 2****,** au moins un module d'obtention OBT CS d'une vitesse de connexion CS au réseau de communication déterminée à partir d'une taille et d'un temps de téléchargement d'au moins un segment temporel déjà téléchargé, un module DET GF de détermination d'un rapport, dit facteur de gain GF, entre un débit d'encodage réel R dudit segment temporel déjà téléchargé et la qualité Dj associée audit segment temporel dans le fichier de description et un module de sélection SEL1, pour au moins un prochain segment temporel à télécharger, d'une qualité maximale du contenu numérique, en fonction de la vitesse de connexion et du facteur de gain GF. Avantageusement, le dispositif HAS, 100 comprend en outre un module comparaison COMP de la vitesse de connexion à un seuil prédéterminé TH et un module de décision DEC d'un mode de sélection de la qualité du prochain segment temporel en fonction d'un résultat de la comparaison, le module de sélection SEL1 étant exécuté lorsque la vitesse de connexion est inférieure audit seuil prédéterminé, le module SEL2 étant exécuté sinon. Il comprend aussi un module REQ de requête de téléchargement du prochain segment temporel à la qualité choisie.

Le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions.

Plus généralement, un tel dispositif 100, HAS comprend une mémoire vive 103 (par exemple une mémoire RAM), une unité de traitement 102 équipée par exemple d'un processeur, et pilotée par un programme d'ordinateur Pg, représentatif des modules de comparaison et de sélection, stocké dans une mémoire morte 101 (par exemple une mémoire ROM ou un disque dur). A l'initialisation, les instructions de code du programme d'ordinateur sont par exemple chargées dans la mémoire vive 103 avant d'être exécutées par le processeur de l'unité de traitement 102. La mémoire vive 103 peut aussi contenir le fichier de description MPD, des segments temporels déjà téléchargés, la vitesse de connexion et le facteur de gain.

La **figure 5** illustre seulement une manière particulière, parmi plusieurs possibles, de réaliser le dispositif HAS, 100 afin qu'il effectue les étapes du procédé de gestion du téléchargement progressif et adaptatif d'un contenu numérique au sein d'un terminal lecteur de flux multimédia connecté à un réseau de communication tel que détaillé ci-dessus, en relation avec les figures **3** **et** **4** dans ses différents modes de réalisation. En effet, ces étapes peuvent être réalisées indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel).

Dans le cas où le dispositif HAS, 100 est réalisé avec une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

Les différents modes de réalisation ont été décrits ci-avant en relation avec un dispositif 100 intégré dans un terminal lecteur de flux multimédia connecté à un réseau de télécommunications sans fil, tel que par exemple un élément STB ou une clé HDMI, mais il peut aussi être intégré au terminal TU lui-même, qui peut être un téléphone mobile de type téléphone intelligent (pour « smartphone », en anglais), un ordinateur de type PC (pour « Personal computer », en anglais) ou une tablette.

Selon une variante de réalisation de l'invention illustrée par la figure **2****,** le dispositif 100 s'appuie sur la structure matérielle du terminal lecteur, qui a ici la structure matérielle d'un ordinateur et comprend plus particulièrement un processeur, une mémoire vive, une mémoire morte, une mémoire flash non volatile ainsi que des moyens de communication sans fil qui lui permettent de communiquer avec le terminal lecteur et le serveur de contenus numériques via le réseau de communication. La mémoire morte constitue un support d'enregistrement conforme à l'invention, lisible par le processeur et sur lequel est enregistré le programme d'ordinateur Pg1 conforme à l'invention, comportant des instructions pour l'exécution du procédé de gestion du téléchargement progressif et adaptatif d'un contenu numérique au sein du terminal lecteur selon l'invention.

L'invention qui vient d'être décrite dans ses différents modes de réalisation présente de nombreux avantages. En particulier, le nouveau mode de sélection de la qualité d'un segment temporel à télécharger qu'elle propose, permet de s'adapter plus finement à la bande passante dont dispose l'utilisateur. En outre, le fait de réserver le bénéfice de ce nouveau mode de sélection aux utilisateurs équipés d'une connexion au réseau à bas débit, en tout état de cause présentant une vitesse de connexion inférieure à un seuil prédéterminé, permet au fournisseur du service d'offrir une meilleure qualité d'images aux utilisateurs bénéficiant d'une mauvaise connexion au réseau, tout en optimisant la consommation de bande passante pour les utilisateurs dotés d'une connexion plus haut débit.

### ANNEXE 1 : exemple de fichier manifeste

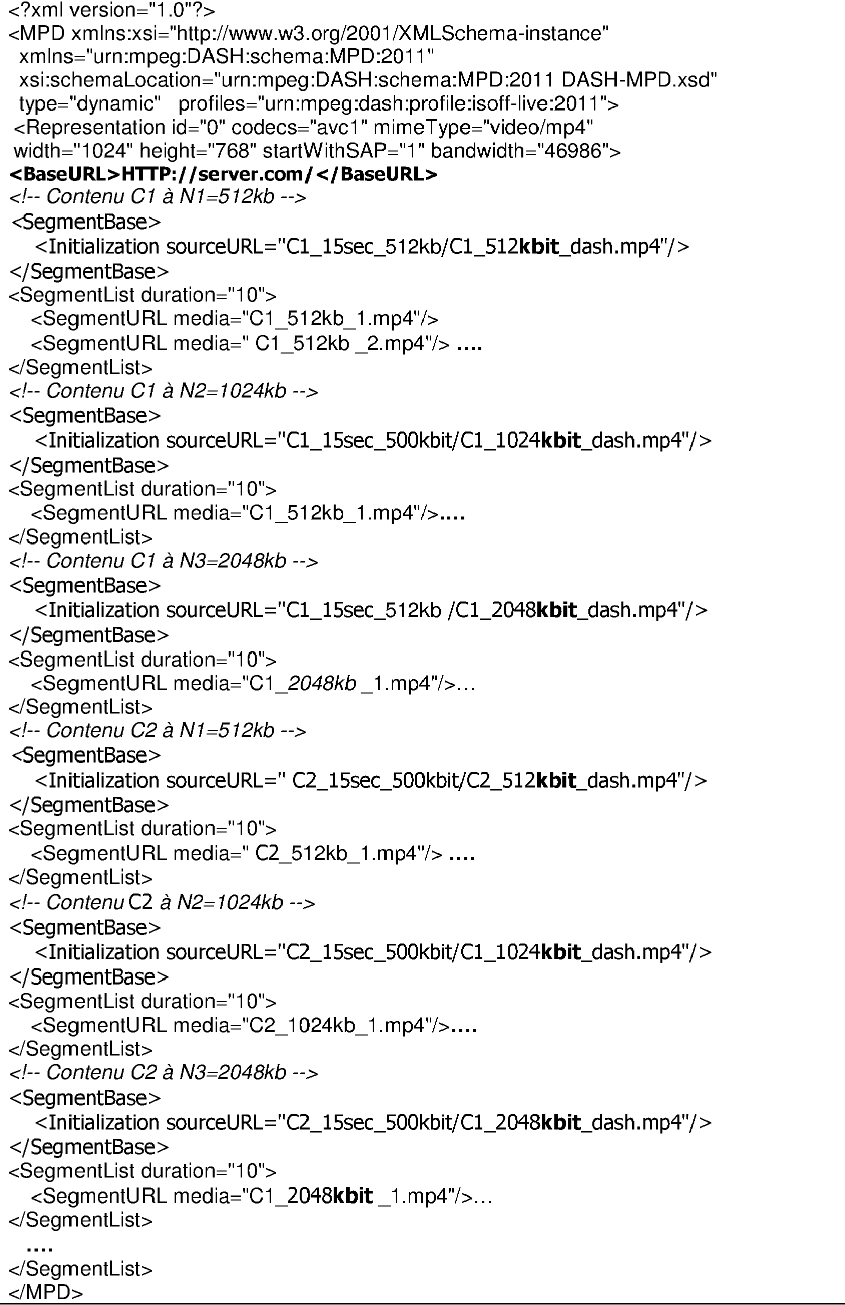

## Revendications

1. Procédé de gestion du téléchargement progressif adaptatif d'un contenu numérique (C) au sein d'un terminal (3, 4, 8) lecteur de flux multimédia connecté à un réseau de communication (1),
ledit contenu numérique étant associé à un fichier (7) de description dudit contenu numérique, comprenant une liste de segments temporels (Ci@Dj) dudit contenu associés chacun à plusieurs débits d'encodage (Dj) correspondant à plusieurs qualités, ledit débit d'encodage étant associé pour ladite qualité à une résolution dudit contenu,
**caractérisé en ce que** ledit procédé met en œuvre :
- une obtention (32) d'une vitesse de connexion (CS) au réseau de communication déterminée à partir d'une taille et d'un temps de téléchargement d'au moins un segment temporel déjà téléchargé, et
- une sélection (37) pour au moins un prochain segment temporel à télécharger, d'une qualité maximale du contenu, en fonction de la vitesse de connexion et d'un rapport, dit facteur de gain (GF), entre un débit d'encodage réel (R) dudit segment temporel déjà téléchargé et un débit d'encodage (Dj) correspondant à la qualité associée audit segment temporel dans le fichier de description.

2. Procédé de gestion du téléchargement progressif et adaptatif d'un contenu numérique selon la revendication **1, caractérisé en ce que** la vitesse de connexion est comparée (33) à un seuil prédéterminé (TH) et en ce l'étape de sélection (35) est exécutée si la vitesse de connexion est inférieure audit seuil prédéterminé.

3. Procédé de gestion du téléchargement progressif et adaptatif d'un contenu numérique selon la revendication 2, **caractérisé en ce que** si la vitesse de connexion est supérieure au seuil prédéterminé, le procédé comprend une sélection (38) d'une qualité maximale du contenu en fonction de la seule vitesse de connexion.

4. Procédé de gestion du téléchargement progressif adaptatif d'un contenu numérique selon la revendication 2, **caractérisé en ce que** la sélection d'une qualité pour au moins un prochain segment temporel à télécharger comprend en outre, lorsque la vitesse de connexion est inférieure audit seuil prédéterminé :
- une pondération (36) des qualités associées aux segments temporels dans le fichier de description par le facteur de gain ;
- une comparaison (37) des qualités pondérées à la vitesse de connexion, la qualité dont la valeur pondérée est à la fois inférieure à et la plus proche de la vitesse de connexion, étant choisie.

5. Procédé de gestion du téléchargement progressif adaptatif d'un contenu numérique selon l'une des revendications 1 à 4, **caractérisé en ce qu'**il comprend un moyennage du facteur de gain (GF) sur une pluralité de segments temporels successivement téléchargés.

6. Procédé de gestion du téléchargement progressif adaptatif (d'un contenu numérique selon l'une des revendications 1 à 5, **caractérisé en ce que** ledit contenu numérique est encodé avec un débit d'encodage variable (VBR) et ledit débit d'encodage théorique associé à un segment temporel dans le fichier de description est un débit maximal autorisé (PCR).

7. Procédé de gestion du téléchargement progressif adaptatif (HAS) d'un contenu numérique selon l'une des revendications 1 à 5, **caractérisé en ce que** ledit contenu numérique est encodé avec un débit d'encodage fixe (CBR) et les qualités (Dj) associées à un segment temporel dans le fichier de description sont des débits d'encodage moyens (ABR).

8. Procédé de gestion de gestion du téléchargement progressif adaptatif (HAS) d'un contenu numérique selon l'une des revendications 1 à 5, **caractérisé en ce que** ledit contenu numérique est encodé avec un débit d'encodage variable (VBR) et les qualités (Dj) associées à un segment temporel dans le fichier de description sont des débits d'encodage moyens (ABR).

9. Produit programme d'ordinateur comprenant des instructions de code de programme pour la mise en œuvre d'un procédé de gestion du téléchargement progressif adaptatif d'un contenu numérique (C) selon l'une quelconque des revendications 1 à 8, lorsqu'il est exécuté par un processeur.

10. Support d'enregistrement lisible par un ordinateur sur lequel est enregistré un programme d'ordinateur selon la revendication 9.

11. Dispositif (100, HAS) de gestion du téléchargement progressif adaptatif (HAS) d'un contenu numérique (C1) au sein d'un terminal (3, 4, 8) lecteur de flux multimédia connecté à un réseau de communication (1),
ledit contenu numérique étant associé à un fichier (7) de description dudit contenu numérique, comprenant une liste de segments temporels (Ci@Dj) dudit contenu associés chacun à plusieurs débits d'encodage (Dj) correspondant à plusieurs qualités, ledit débit d'encodage étant associé pour ladite qualité à une résolution dudit contenu,
**caractérisé en ce que** ledit dispositif est configuré pour :
- obtenir (OBT. CS) une vitesse de connexion (CS) au réseau de communication à partir d'une taille et d'un temps de téléchargement d'au moins un segment temporel déjà téléchargé, et
- sélectionner (SEL1) pour au moins un prochain segment temporel à télécharger, une qualité maximale du contenu numérique, en fonction de la vitesse de connexion et d'un rapport, dit facteur de gain (GF), entre un débit d'encodage réel (R) dudit segment temporel déjà téléchargé et un débit d'encodage (Dj) correspondant à la qualité associée audit segment temporel dans le fichier de description.

12. Terminal lecteur de flux multimédia configuré pour se connecter à un réseau de communication (1), **caractérisé en ce qu'il** comprend un dispositif (100, HAS) de téléchargement progressif adaptatif d'un contenu numérique (C) selon la revendication 11.
